Europäisches Patentamt

European Patent Office (11) Publication number: **0 067 713**

Office européen des brevets **B1**

(12) **EUROPEAN PATENT SPECIFICATION**

(45) Date of publication of patent specification: **03.10.84**

(51) Int. Cl.³: **A 01 N 47/30** // (A01N47/30, 43/40)

(21) Application number: **82303106.7**

(22) Date of filing: **15.06.82**

(54) Composition for a herbicide and method for controlling the growth of plants.

(30) Priority: **15.06.81 GB 8118325**

(43) Date of publication of application:
**22.12.82 Bulletin 82/51**

(45) Publication of the grant of the patent:
**03.10.84 Bulletin 84/40**

(84) Designated Contracting States:
**BE CH DE FR IT LI SE**

(56) References cited:
**US-A-4 110 104**

**C.R. WORTHING: "The pesticide manual", 6th edition, 1979, B.C.P.C. publications, Croydon (GB), page 314**

(73) Proprietor: **DOW CHEMICAL COMPANY LIMITED**
**Heatrow House Bath Road**
**Hounslow TW5 9QY (GB)**

(72) Inventor: **Brown, John Graham 7, Allée de l'Alkanal**
**Hameau de Fontmerle Domaine de Hauts de Vougrenier**
**F-06270 Villeneuve-Loubet (FR)**

(74) Representative: **Allard, Susan Joyce et al**
**BOULT, WADE & TENNANT 27 Furnival Street**
**London EC4A 1PQ (GB)**

## Description

The present invention relates to herbicidal compositions and to methods for the control of weeds and grasses.

Both 4-amino-3,5-dichloro-6-fluoro-2-pyridyloxy-acetic acid and 3-(4-isopropylphenyl)-1,1-dimethylurea (isoproturon) are known herbicides which may both be used in the free form. These compounds are disclosed in US—A—4110104 and The Pesticide Manual, 6th Edition, 1979, B.C.P.C. publications, Croydon (GB) by C. R. Worthing at page 314, respectively. The former may also be used in the form of salts or esters thereof.

Salt and ester derivatives included herein are those which are commonly used. For example, salts include the alkali metal salts such as the sodium or potassium salts and salts with amines, such as ethanolamine. Esters that may be employed include alkyl esters ($C_{1-12}$), phenylalkyl ($C_{7-10}$) and alkoxyalkyl ($C_{2-12}$).

It has now been found that a combination of 4-amino-3,5-dichloro-6-fluoro-2-pyridyloxy-acetic acid or a salt or ester thereof and 3-(4-isopropylphenyl)-1,1-dimethylurea, in certain proportions have unexpected properties in the control of broad-leafed weeds and grasses. The degree of control constitutes a synergistic effect.

According to the present invention there is provided a herbicidal composition which comprises a synergistic mixture of active ingredients (A) and (B); ingredient (A) being 4-amino-3,5-dichloro-6-fluoro-2-pyridyloxy-acetic acid or a salt or ester thereof and ingredient (B) being 3-(4-isopropylphenyl)-1,1-dimethylurea.

Ingredient A is preferably in the form of the 1-methylheptyl ester.

Whether or not a particular mixture of active ingredients A and B is a synergistic mixture in accordance with this invention may be determined by the following test:

Three separately growing samples of *Veronica persica* (Buxbaum speedwell) at the 4 to 10 leaf growth stage are sprayed, one with p g/ha or 4-amino-3,5-dichloro-6-fluoro-2-pyridyloxy-acetic acid, or a salt or ester thereof, another with q g/ha of 3-(4-isopropylphenyl)-1,1-dimethylurea, and the third with the mixture under test to give a dose rate of p g/ha of A and q g/ha of B.

After a period of 28 days if the plants are grown in a green house or six to twelve weeks if grown in the field, the plants are inspected to determine what inhibition of growth has occurred.

The results are treated in a manner shown in the article "Calculating Synergistic and Antagonistic Responses of Perbicide Combinations" by S. R. Colby (Weeds 1967 *50* p. 20—22).

By this method an expected result E for the use of the mixture is calculated and compared with the observed result.

If X=percent inhibition of growth with herbicide (a) at p g/ha
and Y=percent inhibition of growth with herbicide (b) at q g/ha
then E=expected percent inhibition of growth with herbicides (a)+(b) at p+q g/ha is equal to

$$X+Y-\frac{XY}{100}$$

If the observed inhibition of growth (O) is 10% or more greater than the calculated expected figure

$$E, (100\times(O-E)/E \geqslant 10)$$

then the mixture is synergistic as the term is used in this specification.

In general, a synergistic effect is observed with compositions which contain A and B in a weight ratio of from 1:10 to 1:320, preferably from 1:10 to 1:80.

The compositions of the present invention are particularly valuable for the selective control of weeds, particularly broad-leafed weeds and grasses in cereal crops, such as wheat and in barley and in graminaceous crops generally. Since the compositions are selective, a co-potentiating or synergistic effect is not observed with respect to all kinds of plants.

The compositions of the present invention have been found to be suitable for use in the general post-emergent control of weeds or other unwanted vegetation. For such uses, compositions of the unmodified combinations of active ingredients of the present invention can be employed. However, the present invention embraces the use of the combinations of active ingredients with an inert carrier or a material known in the art as an adjuvant in solid or liquid form. Thus, for example, the active ingredients can be disposed on a finely divided solid and employed therein as a dust. The active ingredients, or a solid composition comprising the active ingredients may be dispersed in a suitable solvent, typically with the aid of a wetting agent, and the resulting suspension employed as a spray.

Preferably the compositions of the present invention are employed in the form of wettable powders, emulsifiable concentrates or as a flowable formulation.

The concentration of the active ingredients in the compositions of the present invention is generally within the range of from 0.0001 to 95 percent by weight. In compositions to be employed as concentrates, the active ingredients are usually present in a concentration of from 1 to 80 percent by weight. The compositions may also contain other conventional additives, such as fertilizers, phyto-toxicants, plant growth regulants, or pesticides.

This invention also provides a method for controlling plant growth which comprises applying to plants or to soil a composition as defined hereinbefore.

The rate of application providing the required degree of control will depend on the type of plant, stage of growth of plants and/or climatic conditions.

Usually the composition is applied to provide from 2.5 ppm to 20 ppm of active ingredient (A) and from 200 ppm to 800 ppm of active ingredient (B).

The preferred rate of application being from 2.5 ppm to 20 ppm of active ingredient (A) and 200 ppm of active ingredient (B).

A further embodiment of this invention provides a method for controlling plant growth which method comprises bringing together on the plants or soil 4-amino-3,5-dichloro-6-fluoro-2-pyridyloxy-acetic acid or a salt or ester thereof, and 3-(4-isopropylphenyl)-1,1-dimethylurea, in proportions to form a synergistic mixture as hereinbefore defined.

The compositions of the present invention have been found suitable for post-emergent control of broad-leafed weeds in particular *Veronica persica* (Buxbaum-Speedwell), *Stellaria media* (Chickweed), *Matricaria matricarioides* (rayless mayweed), *Alopecurus myosuroides* (black grass), *Polygonum convolvulus* (black bindweed) and *Galium aparine* (cleavers).

The following Example further illustrate the present invention.

Example

Seeds of *Veronica persica* were planted in a potting compost containing 60% peat in 20.32 cm×12.70 cm (8″×5″) seed trays and plants grown until the 2—4 leaf stage of growth, in a glasshouse at 19°C. At this stage plants were sprayed with aqueous solutions of compound (A) and/or compound (B) 3-(4-isopropylphenyl)-1,1-dimethylurea. The compositions were applied at an equivalent rate of 355 litres water per hectare. Observation of results was made 28 days after application.

Application rates of 20 ppm or below for compound (A) gave poor control, whilst application for compound (B) of 800 ppm or below were ineffective. However application of a solution containing both compounds at rates of 2.5 to 20 ppm for compound (A) and 200—800 ppm of compound (b) gave a surprising increase in control of *Veronica persica*.

Example
Control of *Veronica persica* in laboratory tests

| Treatment | Rate PPM | Control rating[1] |
|---|---|---|
| Compound A | 20 | 2.0 |
| | 15 | 2.0 |
| | 10 | 1.5 |
| | 5 | 1.0 |
| | 2.5 | 0 |
| Compound B | 800 | 0 |
| | 600 | 0 |
| | 400 | 0 |
| | 200 | 0 |
| Compound A+B | 29+200 | 4.5 |
| | 15+200 | 4.5 |
| | 10+200 | 4.0 |
| | 5.0+200 | 3.0 |
| | 2.5+200 | 2.0 |

0=No effect
1=10% control (trace)
2=30% control (slight)
3=60% control (moderate)
4=90% control (severe)
5=100% control (kill)

**Claims**

1. A herbicidal composition which comprises a synergistic mixture of active ingredients (A) and (B); ingredient (A) being 4-amino-3,5-dichloro-6-fluoro-2-pyridyloxy-acetic acid or a salt or ester thereof and ingredient (B) being 3-(4-isopropylphenyl)-1,1-dimethylurea.

2. A composition as claimed in claim 1 wherein ingredient (A) is in the form of the 1-methylheptyl ester.

3. A composition as claimed in any one of the preceding claims wherein the active ingredients (A) and (B) are present in a weight ratio of from 1:10 to 1:320.

4. A composition as claimed in claim 3 wherein the active ingredients (A) and (B) are present in a weight ratio of from 1:10 to 1:80.

5. A composition as claimed in any one of the preceding claims which is in the form of a wettable powder.

6. A composition as claimed in any one of claims 1 to 5 which is in the form of an emulsifiable concentrate or a flowable formulation.

7. A method for controlling the growth of plants which comprises applying to the plants or to the soil a composition as claimed in any one of claims 1 to 6.

8. A method as claimed in claim 7 wherein the composition is applied at a rate to provide from 2.5 ppm to 20 ppm of active ingredient (A) and from 200 ppm to 800 ppm of active ingredient (B).

9. A method as claimed in claim 8 wherein the composition is applied at a rate to provide from 2.5 to 20 ppm of active ingredient (A) and 200 ppm of active ingredient (B).

10. A method for controlling the growth of plants which comprises bringing together on the plants or soil (A) 4-amino-3,5-dichloro-6-fluoro-2-pyridyloxy-acetic acid or a salt or ester thereof and (B) 3-(4-isopropylphenyl)-1,1-dimethylurea to form a synergistic mixture.

11. A method as claimed in any one of claims 7 to 10 wherein the plants whose growth is controlled include broad leaf weeds and grasses.

12. A method as claimed in any one of claims 7 to 11 wherein the plant whose growth is controlled is present amongst cereal plants.

## Patentansprüche

1. Herbizid wirkende Zusammensetzung, bestehend aus einer synergistischen Mischung von aktiven Bestandteilen (A) und (B); wobei Bestandteil (A) 4-Amino-3,5-dichlor-6-fluor-2-pyridyloxy-essigsäure ist oder ein Saltz oder Ester davon und Bestandteil (B) 3-(4-isopropylphenyl)-1,1-dimethylharnstoff.

2. Zusammensetzung nach Anspruch 1, dadurch gekennzeichnet, daß Bestandteil (A) in Form des 1-Methylheptylsters vorliegt.

3. Zusammensetzung nach einem der vorhergehenden Ansprüche, dadurch gekennzeichnet, daß die aktiven Bestandteile (A) und (B) in einem Gewichtsverhältnis von 1:10 bis 1:320 vorhanden sind.

4. Zusammensetzung nach Anspruch 3, dadurch gekennzeichnet, daß die aktiven Bestandteile (A) und (B) vorhanden sind in einem Gewichtsverhältnis von 1:10 bis 1:80.

5. Zusammensetzung nach einem der vorhergehenden Ansprüche, dadurch gekennzeichnet, daß sie in Form eines benetzbaren Pulvers vorliegt.

6. Zusammensetzung nach einem der Ansprüche 1 bis 5, dadurch gekennzeichnet, daß sie in Form eines emulgierbaren Konzentrats oder einer fließfähigen Formulierung vorliegt.

7. Verfahren zur Kontrolle des Wachstums von Pflanzen, das darin gesteht, auf die Pflanzen oder aud den Boden eine Zusammensetzung nach einem der Ansprüche 1 bis 6 aufzubringen.

8. Verfahren nach Anspruch 7, dadurch gekennzeichnet, daß die Zusammensetzung in einer Menge aufgebracht wird, die 2,5 ppm bis 20 ppm an aktivem Bestandteil (A) und 200 ppm bis 800 ppm an aktivem Bestandteil (B) liefert.

9. Verfahren nach Anspruch 8, dadurch gekennzeichnet, daß die Zusammensetzung angewendet wird in einer Menge, daß 2,5 bis 20 ppm aktiver Bestandteil (A) und 200 ppm an aktivem Bestandteil (B) geliefert werden.

10. Verfahren zur Kontrolle des Wachstums von Pflanzen, das darin besteht, auf die Pflanzen oder den Boden zusammen (A) 4-Amino-3,5-dichlor-6-fluor-2-pyridinyl-oxy-essigsäure oder ein Salz oder einen Ester davon und (B) 3-(4-isopropylphenyl)-1,1-dimethyl-harnstoff zu bringen, um eine synergistische Mischung zu bilden.

11. Verfahren nach einem der vorhergehenden Ansprüche 7 bis 10, dadurch gekennzeichnet, daß die Pflanzen, deren Wachstum kontrolliert wird, Breitblattunkräuter und Gräser einschließen.

12. Verfahren nach einem der Ansprüche 7 bis 11, dadurch gekennzeichnet, daß die Pflanze, deren Wachstum kontrolliert wird, zwischen Getreidepflanzen vorhanden ist.

## Revendications

1. Composition herbicide qui comprend un mélange synergique d'ingrédients actifs (A) et (B); l'ingrédient (A) étant l'acide 4-amino-3,5-dichloro-6-fluoro-2-pyridinyl-oxyacétique ou un sel ou un ester de cet acide et l'ingrédient (B) étant la 3-(4-isopropylphényl)-1,1-diméthylurée.

2. Composition selon la revendication 1, dans laquelle l'ingrédient (A) est sous la forme d'ester 1-méthylheptylique.

3. Composition selon l'une quelconque des revendications précédentes, dans laquelle les ingrédients actifs (A) et (B) sont présents dans un rapport pondéral de 1:10 à 1:320.

4. Composition selon la revendication 3, dans laquelle les ingrédients actifs (A) et (B) sont présents dans un rapport pondéral de 1:10 à 1:80.

5. Composition selon l'une quelconque des revendications précédentes, qui est sous la forme d'une poudre mouillable.

6. Composition selon l'une quelconque des revendications 1 à 5, qui est sous la forme d'un concentré émulsionnable ou d'une formulation coulable.

7. procédé pour contrôler la croissance des plantes qui consiste à appliquer sur les plantes ou sur le sol une composition telle que revendiquée dans l'une quelconque des revendications 1 à 6.

8. Procédé selon la revendication 7, dans lequel la composition est appliquée à un taux suffisant pour fournir 2,5 ppm à 20 ppm d'ingrédient actif (A) et 200 ppm à 800 ppm d'ingrédient actif (B).

9. Procédé selon la revendication 8, dans lequel la composition est appliquée à un taux suffisant, pour fournir 2,5 à 20 ppm d'ingrédient actif (A) et 200 ppm d'ingrédient actif (B).

10. Procédé pour contrôler la croissance des plante qui consiste à amener simultanément surles plantes ou sur le sol (A) l'acide 4-amino-3,5-dichloro-6-fluoro-2-pyridinyloxy-acétique ou un sel ou un ester de cet acide et (B) la 3-(4-isopropyl-phényl)-1,1-diméthylurée pour former un mélange synergique.

11. Procédé selon l'une uelconque des revendications 7 à 10, dans lequel les plantes dont la croissance est contrôllée comprennent des mauvaises herbes à larges feuilles et des graminées.

12. Procédé selon l'une quelconque des revendications 7 à 11, dans lequel la plante dont la croissance est contrôlée est présente parmi les plantes céréalières.